(19) Europäisches Patentamt
European Patent Office
Office européen des brevets

(11) EP 2 740 780 A1

(12) EUROPEAN PATENT APPLICATION

(43) Date of publication:
11.06.2014 Bulletin 2014/24

(51) Int Cl.:
*C09K 8/46* (2006.01)          *C04B 28/04* (2006.01)
*G05B 13/00* (2006.01)

(21) Application number: 12306550.0

(22) Date of filing: 07.12.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicants:
• Services Pétroliers Schlumberger
75007 Paris (FR)
Designated Contracting States:
AL FR RS
• Schlumberger Holdings Limited
Tortola (VG)
Designated Contracting States:
AL GB NL RS
• Prad Research Development Limited
Tortola (VG)
Designated Contracting States:
AL AT BE CH CY EE ES FI HR IS LI LU LV MC MK
MT PT RS SE SM
• SCHLUMBERGER TECHNOLOGY B.V.
2514 JG  Den Haag (NL)
Designated Contracting States:
AL BG CZ DE DK GR HU IE IT LT NO PL RO RS
SI SK TR

(72) Inventor: Porcherie, Olivier
92142 Clamart (FR)

(74) Representative: Vandermolen, Mathieu
Etudes & Productions Schlumberger
IP Department
1, rue Henri Becquerel
B.P. 202
92142 Clamart (FR)

(54) Cement blend compositions

(57)     A computer simulator predicts the performance of neat Portland cement systems, or Portland cement systems containing supplementary cementing materials (SCM). Parameters to be entered into the simulator include the cement blend composition, the Bogue composition of the Portland cement, the Blaine surface area of the Portland cement, the absolute density of the Portland cement, the SCM densities, the SCM chemical activity indices, the curing-temperature profile and the curing-pressure profile. The predictions may be verified by laboratory testing before using the cement system during a cementing treatment.

Figure 2

**Description**

**BACKGROUND**

The statements in this section merely provide background information related to the present disclosure and may not constitute prior art.

This disclosure relates to methods for optimizing the performance of Portland cement blends that contain supplementary cementing materials.

During the past thirty years the use of by-product materials in concrete and well cement systems, either as components of blended cements or as additives, has increased significantly. One advantage offered by blended cements is the possibility of using less clinker to produce a given amount of cement, thereby reducing energy consumption and $CO_2$ emissions.

The additives employed to manufacture blended cements are generally known in the industry as supplementary cementing materials (SCM). SCMs may comprise (but would not be limited to) limestone, fly ash, blast furnace slag, silica and natural pozzolans such as diatomaceous earth.

Incorporation of SCMs affects the cement-slurry and set-cement properties in different manners. Since the absolute densities of SCMs are typically lower than that of Portland cement, their incorporation in cement blends affects the rheological properties of the slurry owing to the higher solids content required to achieve a given slurry density. In addition, the particle size distributions of SCMs may differ significantly from that of Portland cement, thereby changing the packing volume fraction and further affecting the rheological properties.

The higher solids content also affects the compressive strength of the set cement. The pozzolanic and/or hydraulic activity of the SCMs alters the hardened cement matrix structure, increases the compressive strength and decreases the open porosity.

In the concrete industry, these effects are predictable and controllable, mainly because concrete applications fall within a relatively narrow service-condition window. In other words, most applications take place at atmospheric pressure and at temperatures encountered at the surface. Therefore, blended cements prepared by cement manufacturers may be used with confidence. The construction industry has developed several methods for evaluating the reactivity of SCMs and predict their behavior in a cement blend.

The Chapelle method evaluates the pozzolanic reactivity of an SCM. An aqueous suspension of the SCM and lime is cured at a defined temperature for a defined duration. The amount of lime consumed by the pozzolan is measured (mg CaO/g pozzolan). The higher the result, the higher the pozzolanic activity. The main limitations of this test are: (i) it only quantifies the pozzolanic activity (not the hydraulic activity) of the SCM; and (ii) it does not reflect the actual performance of the SCM in concrete.

A second measurement that is used by the construction industry is the pozzolanic index-defined as the compressive-strength ratio between a Portland cement/SCM system and a neat Portland cement system of comparable consistency. It may be measured at various curing durations-7, 28 and 90 days being the most common. The principal limitations of this method are: (i) it cannot be used to predict the behavior of the considered SCM; and (ii) it cannot be applied to compare the reactivity of different types of SCMs at various water-to-cement ratios.

A third measurement, the efficiency factor k of an SCM has been introduced. It is defined as the number of parts of cement in a concrete mixture that could be replaced by one part of SCM without changing the property being investigated. Compressive strength is the most common property under consideration. The efficiency factor may be determined experimentally by determining a cement/SCM blend composition whose performance is the same as a reference neat-cement system. However, this approach is time consuming and is therefore not applicable at an industrial scale.

To determine the efficiency factor related to compressive strength, people of the art have developed a faster experimental approach, based on Bolomey's or Abrams' strength relationship. This approach requires the determination of the compressive strength of the reference neat-cement system and the cement/SCM system at the desired curing duration and temperature. For application in the construction industry, the efficiency factor is usually determined after 28 days curing at ambient temperature.

Unfortunately, at shorter curing durations, this method is not applicable. For example in a 1900-kg/m$^3$ slurry composed of 60 wt% Class G + 40 wt% fly ash and cured at 50°C, the efficiency factor of the fly ash is equal to 0.7 after 8 hours, decreases to 0.4 after 3 days, and then starts increasing after 7 days.

In the well cementing industry, the early compressive strength (usually 24 hours) is a critical value for meeting regulatory requirements, resuming well construction operations, etc. Thus, the efficiency factor cannot be used for short curing durations.

The service conditions associated with well cementing also encompass a much wider range of temperature and pressure conditions encountered in subterranean wells. The larger service-condition window increases the difficulty of predicting how a given blend of Portland cement and SCMs will behave. The incorporation of other cement additives such as accelerators, retarders, fluid-loss additive, dispersants, etc. further increases the complexity. Consequently, extensive performance testing in the laboratory is frequently required to optimize a cement slurry containing SCMs for a particular well cementing application.

**SUMMARY**

Methods for predicting short-term cement-system performance over a wide temperature and pressure range, thereby reducing the amount of testing necessary to optimize such systems for a given cementing application, would be welcome in the industry.

In an aspect, embodiments relate to methods for optimizing the performance of cement slurries. The slurries comprise a blend of water and Portland cement. An optimal cement slurry performance range is defined. The slurry performance may comprise compressive strength, permeability, slurry density, carbon footprint or cost and combination thereof. One or more cement-parameter values are determined, said cement parameter comprising a cement-blend composition, a Bogue composition of the Portland cement, a Blaine surface area of the Portland cement, an absolute density of the Portland cement, a curing-temperature profile and a curing-pressure profile. The cement-parameter values are used to predict the cement slurry performance, and it is then determined whether the predicted cement slurry performance is within the optimal range.

In a further aspect, embodiments relate to methods for cementing a subterranean well with a cement slurry. The slurry comprises a blend of water and Portland cement. An optimal cement slurry performance range is defined. The slurry performance may comprise compressive strength, permeability, slurry density, carbon footprint or cost and combination thereof. One or more cement-parameter values are determined, said cement parameter comprising a cement-blend composition, a Bogue composition of the Portland cement, a Blaine surface area of the Portland cement, an absolute density of the Portland cement, a curing-temperature profile and a curing-pressure profile. The cement-parameter values are used to predict the cement slurry performance, and it is then determined whether the predicted cement slurry performance is within the optimal range. If the predicted performance is within the optimal range, the cement composition is placed in the well.

**BRIEF DESCRIPTION OF THE DRAWINGS**

Figure 1 presents a flow chart of the disclosed methods.

Figure 2 presents a compressive-strength comparison between a neat Class G cement system, a Class G/fly ash system and a Class G/slag system, measured with a UCA.

Figure 3 presents a comparison between compressive strength development predicted by the simulator and that measured by a UCA.

Figure 4 presents a series of iso-compressive strength curves generated by the simulator for various blends of Class G cement and fly ash.

**DETAILED DESCRIPTION**

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors possessed knowledge of the entire range and all points within the range.

In well cementing, the properties of the cement slurry and the set cement must be adjusted depending on the well characteristics and cementing operations. Among these properties, the slurry density must be within a range satisfying the well design, formation properties and cementing conditions. The compressive strength of the hardened cement also must meet minimal values to satisfy regulatory and operator requirements, and to resume wellbore operations such as continued drilling or perforating. As discussed earlier, compressive-strength measurements at short curing durations are important parameters, and methods employed by the construction industry to predict compressive strength are not generally applicable.

The present disclosure proposes prediction methods for adjusting cement blend compositions, thereby providing systems with desired properties. The cement blend may comprise water and Portland cement. The blend may further comprise at least one SCM. The SCM may be reactive or non-reactive. The methods may also be used to predict the permeability of the set cement, and calculate the cost of the blend and slurry and the carbon footprint of the cement system.

The cement blend contains API Portland cements (e.g., Class A, B, C, G or H) or construction grade Portland cements in a concentration ranging from 20% to 100% by weight of blend (BWOB). The blend may incorporate more than one type of cement. The prediction methods require one to input the absolute densities, the Bogue compositions and Blaine surface areas for each cement, as well as the blend composition.

The cement blend may contain one or more non-reactive materials, in a concentration up to 80% BWOB. The input data for the prediction methods include the absolute densities and the amounts of each material.

The cement blend may also incorporate one or more SCMs. More preferably, the SCMs may be mixed with the cement. Among them, the most commonly used materials may be ASTM Class F and Class C fly ashes, granulated or pelletized blast furnace slags, natural pozzolanic materials such as volcanic ashes and diatomaceous earth, and amorphous silica. When mixed with a Portland cement slurry, the SCMs begin to react and form additional C-S-H phase, which increases the compressive strength and reduces the porosity of the hardened cement. The total concentration of SCMs in the cement blend may be up to 80% by weight of blend. Input data for the prediction methods include the absolute densities, the Chemical Activity Indices (CAI) and the amount of each SCM in the blend.

The CAI, expressed in percent, may be calculated by the following formula:

$$CAI = \frac{100 \times (CSr - CSnr)}{CSnr}$$ (Eq. 1)

where *CSr* is the compressive strength of the cement based slurry, and *CSnr* is the compressive strength of the cement based slurry at the same curing duration and temperature, but the SCM being considered as non-reactive particles. The CAI, which quantifies the chemical reactivity of the SCM in the blend at a given curing duration and temperature, can be either simulated or determined experimentally from compressive strength measurements.

The methods also require the composition of the cement slurry (including the water content) and parameters such as the curing temperature and pressure. The slurry density may vary from 960 to 2640 kg/m$^3$ (8 to 22 lbm/gal). The curing temperature may vary from 4° to 110°C. The curing pressure may vary from 0.1 to 140 MPa. The cement slurry may also be foamed. Additional optional input data include the costs and the carbon footprints for each material.

As known by those skilled in the art, the cement slurry may also contain additives such as (but not limited to) accelerators, retarders, dispersants, fluid-loss additives, gas-migration additives, gas-generating agents, expanding agents, surfactants and antifoam additives.

The methods may predict compressive strength by calculating the gel/space ratio in the cement slurry, by employing Balshin's expression, or both.

The gel/space ratio prediction comprises determining the volumes of unreacted water and cement, and the volumes of the reaction products which may be hydrates. Their phase distribution in cement slurries is based on measuring the chemically bound (non-evaporable) water, physically bound water (gel water), capillary water (free water) and shrinkage at different degrees of hydration. The relationship between these parameters may be described in the following equations.

Shrinkage:

$$V_s = \rho_c \cdot 6.41^{-5} \cdot \left(1 - \rho_0\right) \cdot \alpha$$ (Eq. 2A)

Capillary Water:

$$V_{cw} = \rho - \left(\rho_c / \rho_w\right) \cdot \left(0.19 + 0.23\right) \cdot \left(1 - \rho_0\right) \cdot \alpha$$ (Eq. 2B)

Gel Water:

$$V_{gw} = (\rho_c / \rho_w) \cdot 0.19 \cdot (1 - \rho_0) \cdot \alpha \qquad \text{(Eq. 2C)}$$

Gel Solid:

$$V_{gs} = \left[ 1 - \rho_c \cdot 6.41^{-5} + (\rho_c / \rho_w) \cdot 0.23 \right] \cdot (1 - \rho_0) \cdot \alpha \qquad \text{(Eq. 2D)}$$

Unhydrated Cement:

$$V_{uc} = (1 - \rho_0) \cdot (1 - \alpha) \qquad \text{(Eq. 2E)}$$

Volume Balance:

$$V_s + V_{cw} + V_{gw} + V_{gs} + V_{us} = 1 \qquad \text{(Eq. 2F)}$$

where $\rho_c$ = cement density (g/cm$^3$); $\rho_w$ = water density (g/cm$^3$); $\rho_0$ = initial porosity (%); and $\alpha$ = degree of hydration. All volumes are expressed in volume fraction.

The reaction products formed during cement hydration have a lower volume than the initial reactants (cement and water). The volume reduction is called chemical shrinkage and may be approximately 6.41 mL/100 g reacted cement (Eq. 2A).

The volume of the hydrated cement occupies approximately 2.06 times the volume of the unreacted cement. Two different types of water may be distinguished in this gel: the chemically bound water, which is an integral part of the gel solid and corresponds to approximately 0.23 g/g reacted cement; and the physically bound water adsorbed at the surface, which corresponds to approximately 0.19 g/g reacted cement. Consequently, this gel has a porosity of approximately 28%. In addition, the sum of the reacted water (0.19 + 0.23 = 0.42) corresponds to the minimum water-to-cement ratio required to obtain full cement hydration (Eqs. 2C and 2D). The remaining water is called capillary water or free water, and is accessible for cement hydration. It may be partially dried, leaving empty pores (Eq. 2B). The unhydrated cement volume falls as hydration progresses. It is limited by the amount of water available (in sealed systems) or by space available for hydration.

Rather than relating strength to the water-to-cement ratio, strength may also be related to the concentration of solid hydration products in the available space. As mentioned above, the volume of the solid hydration products is 2.06 times the volume of the unreacted cement. The space available for the products is composed of the initial water volume and the volume liberated by the hydrated cement. The gel/space ratio r may therefore be calculated as shown in Eq. 3.

$$r = \frac{2.06 \cdot V_c \cdot \alpha}{V_c \cdot \alpha + \dfrac{w_0}{c}} \qquad \text{(Eq. 3)}$$

where c = cement mass; $V_c$ = specific volume of cement (cm$^3$/g); $w_0$ = initial mix water volume; and $\alpha$ = fraction of cement that has hydrated. It has been experimentally determined that the compressive strength is approximately proportional to the cube of the gel/space ratio.

Another empirical porosity-based model to describe the strength S of porous materials is the Balshin expression (Eq. 4).

$$S = S_0 \cdot (1 - p)^B \qquad \text{(Eq. 4)}$$

with $S$ = 0 *at p > $p_{CR}$;* and

$$B \cong \frac{2.35}{\left(q - 0.19\right)^{0.45}}$$

In these expressions, $p$ is the porosity of the cement slurry; $p_{CR}$ is the critical porosity; and $q$ is the relative degree of hydration. An $S_0$ value of approximately 450 MPa is assumed, and corresponds to the zero-porosity strength extrapolated from experimental results on low water-to-cement ratio cement slurries.

The Balshin expression requires the porosity as an input, which depends on the degree of cement hydration $\alpha$. The porosity may be calculated from Eqs. 2A-2E. Therefore, the use of the Balshin expression requires only the knowledge of $\alpha$ as input data.

The degree of cement hydration, $\alpha$, may be estimated by applying a hydration kinetics model that is based on the thermodynamics of multiphase porous media, of which Portland cement is an example. The model relies on parameters that are known to influence cement hydration.

● The chemical composition of the cement. This may be the most important influencing factor. It is known that each clinker phase ($C_3S$, $C_2S$, $C_3A$ and $C_4AF$) have different reaction rates. The amounts of each clinker phase in a cement may be estimated by entering the cement oxide composition into the Bogue equations. The degree of hydration, $\alpha$, calculated by the model is an overall estimate taking all of the clinker phases into account.

● The water-to-cement ratio. Experimental results have shown that the higher water-to-cement ratios do not significantly affect early cement hydration, but do lead to faster hydration rates at longer hydration times. The water-to-cement ratio also influences the ultimate degree of hydration, $\alpha_u$.

● The fineness of the cement. Finer grind cements have larger surface areas, leading to higher $\alpha_u$ values and higher hydration rates. However, at low water-to-cement ratios, the influence of cement fineness on $\alpha_u$ diminishes. The fineness is expressed by the Blaine fineness value.

● The curing temperature. The effects of curing temperature on hydration kinetics have been shown to be twofold. On one hand, the reaction rate $d\alpha/dt$ increases with temperature. On the other hand, the density of hydration particles increases with curing temperature, slowing the permeation of free water through the hydration products. Therefore, at longer hydration times, the hydration rate may be lower at elevated temperatures and the ultimate degree of hydration may be lower. The curing temperature also affects the apparent activation energy $E_a$.

● The curing pressure. Hydration studies performed at pressures up to 85 MPa have shown that the hydration rate of $C_3S$ may be accelerated at higher pressures. However, curing pressure has a negligible effect on the pore structure of hydration products.

The rate of hydration $d\alpha/dt$ is given by the normalized Eq. 5A.

$$\dot{\alpha} = A_\alpha \eta_\alpha \exp\left(-\frac{E_a}{RT}\right)\exp\left(\frac{E_a}{293R}\right) \tag{Eq. 5A}$$

with $A_\alpha$ being the chemical activity calculated through Eq. 5B and $\eta_\alpha$ being the permeability of the hydration product layer, calculated by Eq. 5C. In these equations, $\alpha_u$ represents the ultimate degree of hydration and $s(\alpha,p)$ simulates the effects of applied pressure.

$$A_\alpha\left(\alpha, \frac{w}{c}, Blaine, p\right) = k\left(\frac{A_0}{k\alpha_u} + \alpha\right)\left(\alpha_u - \alpha\right) \cdot s\left(\alpha, p\right) \tag{Eq. 5B}$$

$\dfrac{w}{c}$ is the water-to-cement ratio and $p$ is the curing pressure.

$$\eta_\alpha = \exp(-n\alpha) \qquad \text{(Eq. 5C)}$$

The four constants in these equations may be calculated knowing the Bogue composition and the Blaine surface area of the cement.

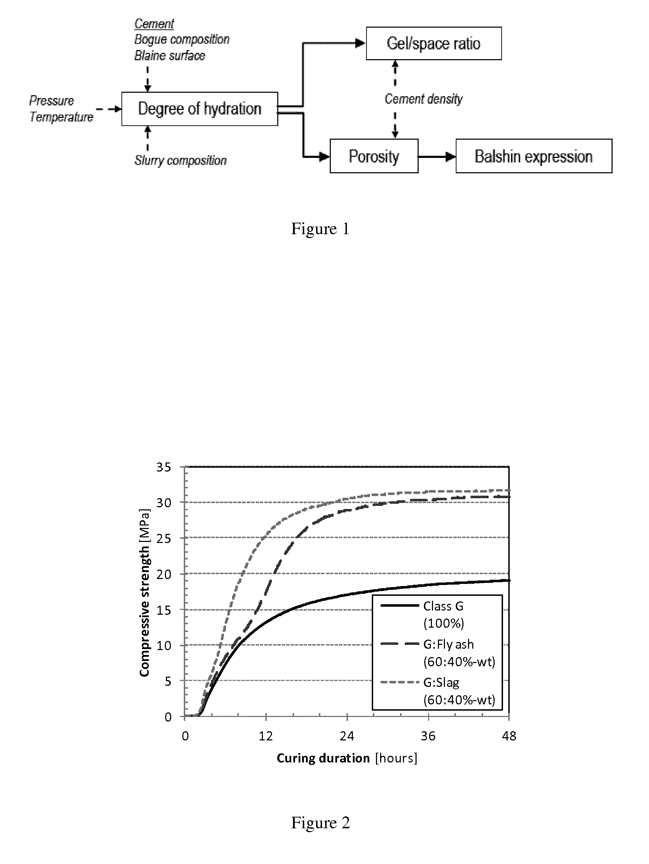

The workflow for the prediction methods is summarized in Fig. 1. The input data are shown in italics. The degree of hydration is calculated by inputting the curing pressure and temperature, the Bogue composition and the Blaine fineness of the cement and the slurry composition. Entering the cement slurry density allows calculation of the gel/space ratio, the porosity of the cement system and provides sufficient information to use the Balshin expression.

The prediction methods may also be used for SCM quality control. A compressive strength measurement would allow one to assess the CAI knowing the cement/SCM ratio, cement properties, absolute densities of the cement and SCM, the water-to-cement ratio and the curing conditions.

In an aspect, embodiments relate to methods for optimizing the performance of a cement slurry that comprises a blend of water and Portland cement. An optimal range of cement-slurry performance is defined. This performance may comprise an optimal compressive strength range, an optimal permeability range, carbon footprint or cost and combinations thereof. One or more cement-parameter values are determined to implement the performance prediction and determine whether the predicted performance is within the defined optimal range. The parameter comprises the candidate cement-blend composition, a Bogue composition of the Portland cement, a Blaine surface area of the Portland cement, the absolute density of the Portland cement, the slurry density, a curing-temperature profile and a curing-pressure profile.

In a further aspect, embodiments relate to methods for cementing a subterranean well with a cement slurry that comprises a blend of water and Portland cement. An optimal range of cement-slurry performance is defined. This performance may comprise an optimal compressive strength range, an optimal permeability range, carbon footprint or cost and combinations thereof. One or more cement-parameter values are determined to implement the performance prediction and determine whether the predicted performance is within the defined optimal range. The parameter comprises the candidate cement-blend composition, a Bogue composition of the Portland cement, a Blaine surface area of the Portland cement, the absolute density of the Portland cement, the slurry density, a curing-temperature profile and a curing-pressure profile. If the performance is within the optimal range, a cementing treatment is performed with the optimized blend. Persons skilled in the art will recognize that the cementing treatment may be a primary or a remedial cementing operation.

For all aspects, the cement composition may further comprise at least one supplementary cementing material. In such cases, the chemical activity indices and absolute densities of the supplementary cementing materials are further determined and added to the list of parameter values that are used to predict the cement slurry performance. The supplementary cementing material may comprise fly ash, blast furnace slag, silica, cement kiln dust, natural pozzolans or zeolites or combinations thereof. The supplementary cementing material concentration in the cement composition may be up to 80% by weight of solids in the cement blend. Thus, the Portland cement concentration in the cement composition may be between 20% and 100% by weight of solids in the cement blend.

For all aspects, the cement composition may further comprise at least one filler material. The filler material may comprise nitrogen, microspheres, calcium carbonate, hematite, ilmenite, barite or manganese tetraoxide and combinations thereof.

For all aspects, a computer simulator may be used to predict the cement slurry performance. The simulator may determine the compressive strength by calculating the gel/space ratio in the cement slurry, or by employing Balshin's expression or both. If the prediction indicates optimal performance, the prediction may be confirmed by performing laboratory testing. If the prediction does not indicate optimal performance, another candidate blend composition may be selected and the methods repeated.

For all aspects, the cement slurry density may be between about 960 kg/m$^3$ and about 2640 kg/m$^3$. The curing temperature may be between about 4°C and about 110°C. The curing pressure may be between about 0.1 MPa and about 140 MPa.

A flow chart of certain embodiments of the methods is given in Fig. 2. Further illustration of the disclosure is provided by the following examples.

**EXAMPLES**

The following examples illustrate how the prediction methods may be used. Those skilled in the art will realize that the disclosure is not limited to the presented examples. In particular, results are presented involving blends wherein the SCMs exhibit pozzolanic or hydraulic reactivity. The same methods could be used to evaluate cement blends containing particles that do not exhibit such reactivity (i.e., the CAI index is equal to zero).

All of the laboratory tests performed to confirm the model predictions were performed in accordance with recommended practices specified by the American Petroleum Institute (API) and the International Organization for Standards (ISO). The methods are presented in the following publication-*Petroleum and Natural Gas Industries-Cements and Materials for Well Cementing-Part 2*: *Testing of Well Cements,* International Organization for Standards Publication No. 10426-2.

All of the examples involved an API Class G cement with the following Bogue composition: $C_3S$ = 60.4 wt%; $C_2S$ = 15.0 wt%; $C_3A$ = 2.5 wt%; and $C_4AF$ = 13.8 wt%. The Blaine surface area was 369 $m^2$/g and the absolute density was 3.24 g/$cm^3$. The performance predictions assumed the bottomhole static temperature (BHST) in the well to be 70°C and the curing pressure to be 21 MPa.

Two SCMs were used in the study: fly ash and blast furnace slag. The absolute densities of the fly ash and blast furnace slag were 2.41 g/$cm^3$ and 2.90 g/$cm^3$, respectively. When blended with the cement at 40% BWOB, the Chemical Activity Indices of the fly ash and blast furnace slag were 50% and 137%, respectively after 24 hours curing at the same BHST and pressure.

**EXAMPLE 1**

For the cementing treatment, the slurry density was fixed at 1900 kg/$m^3$, and a minimum 24-hr compressive strength of 27.6 MPa was required. The curing temperature was 70°C.

In a first step, the presently disclosed methods are used to estimate the compressive strength of the Class G cement after 24 hours curing at 70°C. The result was 16.7 MPa. Laboratory testing with an Ultrasonic Cement Analyzer (UCA) confirmed the predicted result-17.0 MPa. Furthermore, the simulator showed that, after one month at 70°C, the compressive strength would be 28.3 MPa. However, even if an accelerator had been used, the predicted compressive strength would never have reached the required value after 24 hours curing. Thus, one would conclude that the cement should be blended with another component to meet the compressive-strength requirement.

In a second step, cement/SCM blends were considered. Two 60/40 wt% blends were available, prepared either with the fly ash or with the slag. Simulator results predicted that the cement/fly ash and cement/slag blends would develop 24-hr compressive strengths of 29.0 MPa and 30.4 MPa, respectively (Table 1). These predictions were confirmed by UCA testing (Fig. 2).

Table 1. Estimated compressive strengths of 1900 kg/$m^3$ slurries prepared from three cement systems cured for 24 hr at 70°C.

| Blend | Cement | 60/40 Cement/fly ash | 60/40 cement/slag |
|---|---|---|---|
| Estimated compressive strength at 24 hrs - 70°C | 16.7 MPa (2,400 psi) | 29.0 MPa (4,200 psi) | 30.4 MPa (4,400 psi) |

The person skilled in the art may then choose the cement/fly ash or cement/slag blend depending on other parameters such as cost, carbon footprint or other slurry performance parameters such as (but not limited to) rheological properties.

This example illustrates that the compressive strength may be simulated for neat cements and for those containing reactive SCMs such as fly ash and blast furnace slag. It also shows that the simulator correctly predicts compressive strength at short curing durations.

**EXAMPLE 2**

In this example, the slurry density is not to exceed 1800 kg/$m^3$ due to geological constraints. In addition, it is necessary that the set cement attain at least 17.3 MPa compressive strength within 24 hours curing at 70°C.

The simulator is used to estimate the minimum slurry density that will attain the required compressive strength. Table 2 shows the results for neat Class G, 60/40 cement/fly ash and 60/40 cement/slag systems. Based on the simulation only the 60/40 cement/slag system, mixed at 1750 kg/$m^3$, meets the design criteria.

Table 2. Estimated minimum slurry densities for three cement systems to attain at least 17.3 MPa compressive strength in 24 hours at 70°C.

| Blend | Neat Class G Cement | 60/40 cement/fly ash | 60/40 cement/slag |
|---|---|---|---|
| Minimal slurry density | 1900 kg/$m^3$ (15.8 lbm/gal) | 1840 kg/$m^3$ (15.3 lbm/gal) | 1750 kg/$m^3$ (14.6 lbm/gal) |

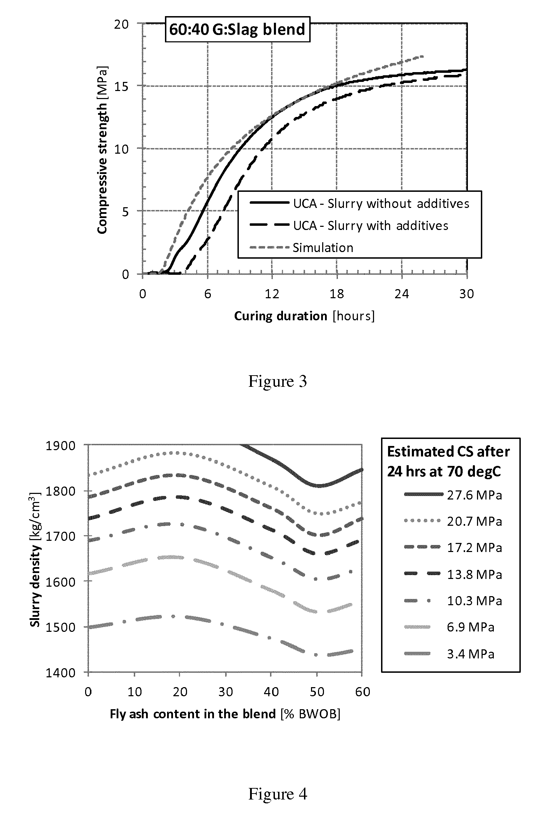

To confirm the simulation, the 60/40 wt% BWOB cement/slag blend was tested by the UCA. The results are shown in Fig. 3. The experimental results showed good agreement with the simulation value.

The cement slurry was further optimized by adding a dispersant, antifoam agent and a fluid-loss-control agent. The UCA curve shows that the compressive strength development was slightly affected by the presence of the additives.

**EXAMPLE 3**

Sometimes one may not have a choice between using fly ash or slag in a cement blend. One may consider a situation in which only fly ash is available. The slurry density must be fixed at 1620 kg/m$^3$, and the system must develop at least 6.9 MPa compressive strength within 24 hours at 70°C. Which is the optimal cement/fly ash blend to achieve this level of performance?

By running the simulator for a series of blends, one may generate a series of iso-compressive strength curves (Fig. 4). In this case, the 6.9-MPa curve intersects with the 1620-kg/m$^3$ line at 100/0% cement/fly ash BWOB or between about 40/60% BWOB and 70/30% BWOB. When deciding which blend to use, one may also consider other parameters such as cost and carbon footprint.

Although only a few example embodiments have been described in detail above, those skilled in the art will readily appreciate that many modifications are possible in the example embodiments without materially departing from this disclosure. Accordingly, all such modifications are intended to be included within the scope of this disclosure as defined in the following claims.

**Claims**

1. A method for optimizing the performance of a cement slurry that comprises a blend of water and Portland cement, comprising:

    (i) defining an optimal cement slurry performance range, the performance comprising compressive strength, permeability, carbon footprint, slurry density or cost and combination thereof;
    (ii) determining one or more cement-parameter values, the parameters comprising a candidate cement-blend composition, a Bogue composition of the Portland cement, a Blaine surface area of the Portland cement, an absolute density of the Portland cement, a curing-temperature profile and a curing-pressure profile;
    (iii) using the cement parameter values to predict the cement slurry performance; and
    (iv) determining whether the predicted cement slurry performance is within the optimal range.

2. The method of claim 1, wherein the cement-blend composition further comprises at least one supplementary cementing material, or at least one filler material or a combination thereof, and the densities and chemical activity indices of the supplementary cementing materials and filler materials are further determined.

3. The method of claim 1 or 2, wherein the supplementary cementing material comprises fly ash, blast furnace slag, silica, cement kiln dust, natural pozzolans, zeolites, or nitrogen or combinations thereof, and the supplementary cementing material concentration in the blend is up to 80% by weight of solids.

4. The method of any one of claims 1-3, further comprising using a computer simulator to predict the cement slurry performance.

5. The method any one of claims 1-4, wherein the simulator determines compressive strength by calculating a gel/space ratio in the cement slurry, or by employing Balshin's expression or both.

6. The method of any one of claims 1-5, wherein the Portland cement concentration is between about 20% and 100% by weight of blend.

7. The method of any one of claims 1-6, wherein the slurry density is between about 960 kg/m$^3$ and about 2640 kg/m$^3$.

8. The method of any one of claims 1-7, wherein the curing temperature is between about 4°C and 110°C.

9. The method of any one of claims 1-8, wherein the curing pressure is between about 0.1 MPa and about 140 MPa.

10. A method for cementing a subterranean well with a cement slurry comprising a blend of water and Portland cement, comprising:

(i) defining an optimal cement slurry performance range, the performance comprising compressive strength, permeability, carbon footprint, slurry density or cost and combination thereof;
(ii) determining one or more cement-parameter values, the parameters comprising a candidate cement-blend composition, a Bogue composition of the Portland cement, a Blaine surface area of the Portland cement, an absolute density of the Portland cement, a curing-temperature profile and a curing-pressure profile;
(iii) using the cement parameter values to predict the cement slurry performance;
(iv) determining whether the predicted cement slurry performance is within the optimal range; and
(v) if the predicted strength is within the optimal range, placing the cement composition in the well.

11. The method of claim 10, wherein the cement-blend composition further comprises at least one supplementary cementing material, or at least one filler material or a combination thereof, and the densities and chemical activity indices of the supplementary cementing materials and filler materials are further determined.

12. The method of claim 10 or 11, further comprising using a computer simulator to predict the cement slurry performance.

13. The method of any one of claims 10-12, wherein the simulator determines compressive strength by calculating a gel/space ratio in the cement slurry, or by employing Balshin's expression or both.

14. The method of any one of claims 10-13, wherein the supplementary cementing material comprises fly ash, blast furnace slag, silica, cement kiln dust, natural pozzolans, zeolites, or nitrogen or combinations thereof, and the supplementary cementing material concentration in the blend is up to 80% by weight of blend.

15. The method of any one of claims 10-14, wherein the Portland cement concentration is between about 20% and 100% by weight of blend.

Figure 1

Figure 2

Figure 3

Figure 4

Europäisches
Patentamt

European
Patent Office

Office européen
des brevets

## EUROPEAN SEARCH REPORT

Application Number

EP 12 30 6550

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/212892 A1 (SANTRA ASHOK K [US] ET AL) 26 August 2010 (2010-08-26) * claims * | 1-15 | INV. C09K8/46 C04B28/04 G05B13/00 |
| A | US 2011/004333 A1 (ANDERSEN PER JUST [US]) 6 January 2011 (2011-01-06) * claims * | 1-15 | |
| A | WO 03/037523 A1 (KAUTAR OY [FI]; VIRTANEN PENTTI [FI]) 8 May 2003 (2003-05-08) * examples - claims * | 1-15 | |
| A | S. M. ABD ET AL: "Modeling the Prediction of Compressive Strength for Cement and Foam Concrete", INTERNATIONL CONFERENCE ON CONSTRUCTION AND BUILDING TECHNOLOGY, vol. 31, 1 January 2008 (2008-01-01), pages 343-354, XP055060986, * the whole document * | 1-15 | |

TECHNICAL FIELDS
SEARCHED (IPC)

C09K
C04B
G05B

The present search report has been drawn up for all claims

| Place of search | Date of completion of the search | Examiner |
|---|---|---|
| Munich | 24 April 2013 | Zimpfer, Emmanuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 30 6550

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2013

| Patent document cited in search report | | Publication date | Patent family member(s) | | Publication date |
|---|---|---|---|---|---|
| US 2010212892 | A1 | 26-08-2010 | NONE | | |
| US 2011004333 | A1 | 06-01-2011 | NONE | | |
| WO 03037523 | A1 | 08-05-2003 | CA | 2464901 A1 | 08-05-2003 |
| | | | EP | 1458489 A1 | 22-09-2004 |
| | | | FI | 20021445 A | 02-05-2003 |
| | | | US | 2005000393 A1 | 06-01-2005 |
| | | | US | 2009158962 A1 | 25-06-2009 |
| | | | WO | 03037523 A1 | 08-05-2003 |

EPO FORM P0459

For more details about this annex : see Official Journal of the European Patent Office, No. 12/82